(19) Europäisches Patentamt
European Patent Office
Office européen des brevets

(11) **EP 4 614 641 A1**

(12) **EUROPEAN PATENT APPLICATION**

(43) Date of publication:
**10.09.2025  Bulletin 2025/37**

(21) Application number: **25159637.5**

(22) Date of filing: **24.02.2025**

(51) International Patent Classification (IPC):
*H01M 10/0525* (2010.01)   *H01M 50/417* (2021.01)
*H01M 50/434* (2021.01)   *H01M 50/443* (2021.01)
*H01M 50/446* (2021.01)   *H01M 50/451* (2021.01)
*H01M 50/457* (2021.01)   *H01M 50/489* (2021.01)
*H01M 50/491* (2021.01)

(52) Cooperative Patent Classification (CPC):
H01M 10/0525; H01M 50/417; H01M 50/434;
H01M 50/443; H01M 50/446; H01M 50/451;
H01M 50/457; H01M 50/489; H01M 50/491

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2024  KR 20240027674**

(71) Applicants:
• **SK Innovation Co., Ltd.
Seoul 03188 (KR)**

• **SK ie technology Co., Ltd.
Jongno-gu
Seoul
03188 (KR)**

(72) Inventors:
• **JI, Sang Yoon
34124 Daejeon (KR)**
• **AHN, Jun Hwan
34124 Daejeon (KR)**
• **LEE, Chang Hee
34124 Daejeon (KR)**

(74) Representative: **Prüfer & Partner mbB
Patentanwälte · Rechtsanwälte
Sohnckestraße 12
81479 München (DE)**

(54) **ELECTROCHEMICAL DEVICE INCLUDING POROUS SEPARATOR**

(57) Electrochemical devices are disclosed for various applications such as secondary batteries. In an embodiment, an electrochemical device includes a positive electrode, a negative electrode, a separator, and an electrolyte. The separator includes a porous membrane including a core-shell structure that includes formed on at least one polyolefin strand. The coating shell includes one or more of a hydrophilic inorganic material or a hydrophilic polymer. The electrolyte includes a nitrile-based compound. The electrochemical device exhibits high ionic conductivity by including the porous separator having wettability to the electrolyte.

FIG. 3

EP 4 614 641 A1

**Description**

**TECHNICAL FIELD**

The technology and implementations disclosed in this patent document generally disclosed technology relate to an electrochemical device including a porous separator.

**BACKGROUND**

An electrochemical device is commonly manufactured by forming cells each including a negative electrode, a positive electrode, and a separator disposed between the negative electrode and the positive electrode, and subsequently assembling the cells by winding them into a cylindrical shape or stacking them in a layered structure. The assembled cells are then inserted into a pouch, into which an electrolyte such as a liquid phase electrolyte is injected. Such an electrolyte serves to enable efficient ion transport between the electrodes, and generally includes a solvent and a salt.

Recently, there has been an increasing demand for electrochemical devices with large capacities to enable their application such as electric vehicles, energy storage devices, and similar technologies. However, as the capacity of the electrochemical device increases, the risk of fire and explosion also increases, necessitating enhanced heat resistance and safety measures for the electrochemical device. Hence, the safe electrochemical device with large capacity is required.

**SUMMARY**

The disclosed technology can be implemented in some embodiments to provide an electrochemical device that includes an electrolyte including a nitrile-based compound and a porous separator having wettability to the electrolyte in various applications, including, for example, rechargeable secondary batteries such as lithium secondary batteries. This addresses problems of conventional hydrophobic films or separators such as polyolefin-based films when used with an electrolyte comprising a nitrile-based compound, where wettability may be reduced and electrical resistance may be increased. The presently disclosed technology therefore can be implemented in some embodiments to provide an electrochemical device with higher thermal stability and in keeping nonflammability when the electrolyte comprises a nitrile-based compound.

In one general aspect, an electrochemical device includes a positive electrode, a negative electrode, a separator, and an electrolyte, wherein the separator is a porous membrane including a core-shell structure in which a coating shell including one or more of a hydrophilic inorganic material or a hydrophilic polymer is formed on at least one polyolefin strand, and the electrolyte includes a nitrile-based compound. In some implementations, the separator is disposed between the positive electrode and the negative electrode and configured to act as a barrier between the positive electrode and the negative electrode. In some implementations, the electrolyte is disposed in the electrochemical device and configured to allow ions to pass between the positive electrode and the negative electrode. In an example embodiment, the nitrile-based compound may include succinonitrile, (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undecanedinitrile, and/or dodecandinitrile.

In an example embodiment, the electrolyte may further include a lithium salt. When the electrolyte further includes the lithium salt, a weight ratio between the nitrile-based compound and the lithium salt may be 1:10 to 10:1.

In an example embodiment, the lithium salt may include lithium bis(trifluoromethanesulfonyl)imide (LiTFSI), lithium bis(fluorosulfonyl)imide (LiFSI), lithium bis(oxalato)borate (LiBOB), $(C_2F_5SO_2)_2NLi$, LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $(CF_3SO_2)_3CLi$, $LiBF_2(C_2O_4)$, $LiAlO_2$, and/or LiN $(C_xF_{2x+1}SO_2)$ $(C_yF_{2y+1}SO_2)$ (wherein x and y are natural numbers).

In an example embodiment, the electrolyte includes, or consists of, succinonitrile as the nitrile-based compound, and a lithium salt which are mixed with each other, optionally with an additive.

In an example embodiment, the polyolefin may include polyethylene and/or polypropylene.

In an example embodiment, the hydrophilic inorganic material may include $Al_2O_3$, boehmite (ALOOH), $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, and/or $CeO_2$.

In an example embodiment, the hydrophilic inorganic material may have an average particle size of 1 nm to 200 nm.

Specifically, the hydrophilic polymer may include one or more of polyethylene oxide (PEO), polyimide (PI), polysulfone (PS), polyethersulfone (PES), cellulose acetate (CA), polyacrylonitrile (PAN), polyethylene glycol (PEG), polypropylene glycol (PPG), polymethylmethacrylic acid (PMMA), polyacrylic acid (PAA), and/or polyvinyl alcohol (PVA).

In an example embodiment, the coating shell may have an average thickness of 0.5 nm to 200 nm.

In an example embodiment, the electrolyte may be present in, or may adopt, a liquid phase or a gel phase at room temperature. When the liquid phase or gel phase electrolyte is placed in a quartz cell of $10\times40\times50$ mm and allowed to stand at room temperature for 12 hours, and then a haze is measured using a calorimeter (e.g., COH400, Nippon Denshoku Co., Ltd.) with the electrolyte being spaced 100 mm vertically from a halogen lamp under the conditions of a rated voltage of 12 V and a power consumption of 50 W, the liquid phase may have the haze of 50% or less and the gel phase may have the haze of more than 50% and less than 90%.

In an example embodiment, at least a part of the electrolyte may be disposed within pores of the separator. In one example, at least a part of the electrolyte may fill the pores of the separator. This is beneficial, since the separator is sufficiently wettable in the electrolyte.

In an example embodiment, the electrolyte may include a carbonate-based additive of 0.1 wt% to 10 wt% with respect to the total weight of the electrolyte.

In an example embodiment, the separator may have a thickness of 1 $\mu$m to 100 $\mu$m.

In example embodiments, the electrolyte may be formed of only the nitrile-based compound, or of only the nitrile-based compound and the lithium salt, or of only the nitrile-based compound, the lithium salt and optionally the carbonate-based additive.

According to the present disclosure, it is effective when the separator does not make use of a coating of a surface layer on one or both surface(s) of a porous polyolefin membrane.

In an example embodiment, a contact angle of the separator may be 5° to 50°. In an example embodiment, the separator may have an ionic conductivity of $0.1\times10^{-4}$ S/cm or more at 25 °C. In some embodiments, the term "contact angle" may refer to the angle between a liquid surface of a liquid and a solid surface of a solid material where they meet for characterizing the wetting property of the solid material by the liquid.

In an example embodiment, the separator may have a porosity of 20% to 80%.

In an example embodiment, the electrochemical device may be a lithium secondary battery.

In a further aspect, the present disclosure provides a use of a combination of a separator and an electrolyte, wherein the separator includes a porous film including a core-shell structure that includes a coating shell formed on at least one polyolefin strand, wherein the coating shell includes one or more of a hydrophilic inorganic material or a hydrophilic polymer, and the electrolyte includes a nitrile-based compound. In a further example embodiment, the combined use provides effects of wettability - improved compared to a film or separator including a hydrophobic polymer film or substrate, even if the hydrophobic polymer film or substrate has a coating layer placed on the film/substrate surface - of the film or separator which includes the inorganic particles and the polymer binder, towards the electrolyte including the nitrile-based compound, while simultaneously providing effective performance of thermal stability, nonflammability and fire stability associated with the nitrile-based compound. In further example embodiments, the combination makes use of the porous separator and the electrolyte as described above and as disclosed herein.

In example embodiments, the electrochemical device described above, or the aforementioned combined use of the separator and the electrolyte, respectively may be used in methods to manufacture electric vehicles, uninterruptible power supplies, battery storage power stations, solar panels, and/or wind power generators.

Other features and aspects will be apparent from the following detailed description, the drawings, and the claims.

## BRIEF DESCRIPTION OF THE DRAWINGS

FIG. 1 is a schematic plan view of a lithium secondary battery based on an example embodiment.
FIG. 2 is a schematic cross-sectional view of the lithium secondary battery based on an example embodiment.
FIG. 3 schematically illustrates a cross section of a core-shell structure material included in a separator based on an example embodiment. In some embodiments of the disclosed technology, a diameter of a polyolefin strand of a core 20 refers to a length of a part marked as D in FIG. 3, and a thickness of a coating shell 10 refers to a length of a part marked as T in FIG. 3.

## DETAILED DESCRIPTION

Section headings are used in the present document only for ease of understanding and do not limit scope of the embodiments to the section in which they are described.

Some embodiments described in this patent document may be modified in various forms, and the disclosed technology is not limited to specific embodiments. In some embodiments, terms such as "comprising," "including," "containing," "being provided with," or "having" do not exclude the presence of other elements. In some embodiments, these terms mean the inclusion of additional elements, , materials, or processes not explicitly mentioned.

In some embodiments, the numerical range encompasses all values within the specified range, including the lower limit, the upper limit, and all increments logically derived within the range. In some embodiments, the numerical range also includes all possible combinations of the upper limit and the lower limit in the numerical range defined in different forms. As an example, if the content of a composition is defined as 10% to 80% or 20% to 50%, the numerical ranges of 10% to 50% or 50% to 80% can also be considered as being disclosed. In some embodiments, values that may fall outside a defined numerical range due to experimental error or rounding are also included in the defined numerical range.

In some embodiments, the term "about" may be used to encompass a range within 30%, 25%, 20%, 15%, 10%, 5%, 3%, 2%, 1%, or 0.5% of the specified value.

In some embodiments, the term "particle diameter" may be used to indicate a $D_{50}$ value measured by a laser diffraction. Particle diameter was measured in accordance with the ISO standard(ISO13320-1) using a particle size analyzer (Microtrac, Microtrac S3500).

In some embodiments, when a part such as a layer, a film, a thin film, a region, or a plate is described as being "on" or "above" another part, the part may be "directly on" the other part, or there can be an additional part interposed between the part and the other part.

In some embodiments, the term "polymer (high molecule)" refers to a molecule with a relatively high molecular weight, and its structure may include multiple repeating units derived from low molecular weight molecules. In some embodiments, the term "polymer" may be used to indicate an alternating copolymer, a block copolymer, a random copolymer, a graft copolymer, a gradient copolymer, a branched copolymer, a crosslinked copolymer, or a copolymer including all of them (e.g., a polymer including more than one monomer). In another embodiment, the polymer may be a homopolymer (e.g., a polymer including one monomer). The molecular weight of a polymer is defined with a weight average molecular weight, which is measured by measurement of weight average molecular weight below.

The wettability of the separator with an electrolyte plays a very important role to maintain the electrochemical properties of the device, while implementing a high-capacity and high-output electrode active material.

In an implementation, an electrochemical device may include a separator that exhibits sufficient wettability to an electrolyte including a nitrile-based compound. Specifically, the disclosed technology can be implemented in some embodiments to provide an electrochemical device including a positive electrode, a negative electrode, a separator, and an electrolyte, wherein the separator includes a porous membrane including a core-shell structure that includes a coating shell formed on at least one polyolefin strand, wherein the coating shell includes one or more of a hydrophilic inorganic material or a hydrophilic polymer, and the electrolyte includes a nitrile-based compound.

The separator including the core-shell structure based on an implementation of the disclosed technology has wettability to the electrolyte including a nitrile-based compound. In some implementations of the disclosed technology, the separator may exhibit significantly high wettability compared to a hydrophobic polymer separator that does not include a hydrophilic inorganic material and/or polymer. In addition, the separator based on an implementation of the disclosed technology may exhibit significantly higher ionic conductivity than a separator formed by coating a hydrophilic inorganic material and/or polymer on a hydrophobic polymer separator (e.g., any one surface of the separator).

In an example embodiment, the coating shell including the hydrophilic inorganic material (hereinafter, referred to as an inorganic layer) may be formed from a composition including hydrophilic inorganic particles. The hydrophilic inorganic particles are not particularly limited to specific hydrophilic inorganic particles or a specific hydrophilic inorganic material. For example, the hydrophilic inorganic material may include one or more of $Al_2O_3$, boehmite (AlOOH), $SiO_2$, $SnO_2$, $ZrO_2$, $TiO_2$, SiC, $Si_3N_4$, CaO, MgO, ZnO, $BaTiO_3$, $LiAlO_2$, $BaSO_4$, $CaCO_3$, $Y_2O_3$, and/or $CeO_2$.

In an example embodiment, the hydrophilic inorganic material or the hydrophilic inorganic particles may have an average particle size of, for example, 1 nm to 200 nm, 10 nm to 150 nm, 10 nm to 150 nm, 10 nm to 100 nm, 30 nm to 80 nm, or about 40 nm as D50.

In an example embodiment, the hydrophilic inorganic material or the hydrophilic inorganic particles may have a specific surface area of, for example, 1 $m^2$/g to 1000 $m^2$/g, 10 $m^2$/g to 500 $m^2$/g, or 10 $m^2$/g to 100 $m^2$/g measured by measurement of specific surface area below.

In an example embodiment, the hydrophilic polymer is not particularly limited a specific hydrophilic polymer. For example, the hydrophilic polymer may be a polymer having 3 to 10, 3 to 8, or 3 to 6 carbon atoms, or may include a hydrophilic group (substituent including an oxygen atom). Specifically, for example, the hydrophilic polymer may include any one or more of polyethylene oxide (PEO), polyimide (PI), polysulfone (PS), polyethersulfone (PES), cellulose acetate (CA), polyacrylonitrile (PAN), polyethylene glycol (PEG), polypropylene glycol (PPG), polymethylmethacrylic acid (PMMA), polyacrylic acid (PAA), and/or polyvinyl alcohol (PVA). In an example embodiment, the hydrophilic polymer may be a block copolymer including one or more of the hydrophilic polymers or a hydrophobic polymer.

In an example embodiment, the coating shell refers to a shell layer formed by being coated on at least one strand of a polyolefin fabric that forms the core. In example embodiments, the coating shell (shell layer) may be formed by being coated on as many strands as suitable or possible, optionally a majority of strands or essentially all strands of a polyolefin fabric (which strand(s) form the core). As such, the core-shell structure of the disclosed technology, which includes the coating shell formed on one or more polyolefin strand(s), is distinct from - and thus may beneficially not use - the mere coating a surface layer on one or both surface(s) of a porous polyolefin membrane. In an example embodiment, ALD (atomic layer deposition) may be a method to coat the strand or strands with the hydrophilic material. The hydrophilic material of the coating shell may be a hydrophilic inorganic layer including the hydrophilic inorganic material, a hydrophilic polymer layer including the hydrophilic polymer, and/or a layer including both the hydrophilic inorganic material and the hydrophilic polymer. The hydrophilic inorganic layer may be formed by coating a composition including hydrophilic inorganic particles, and the resulting inorganic layer may be an inorganic material deposited in the form of a uniform membrane on a polyolefin strand. That is, in this case, the inorganic material included in the inorganic layer may not exist in the form of particles.

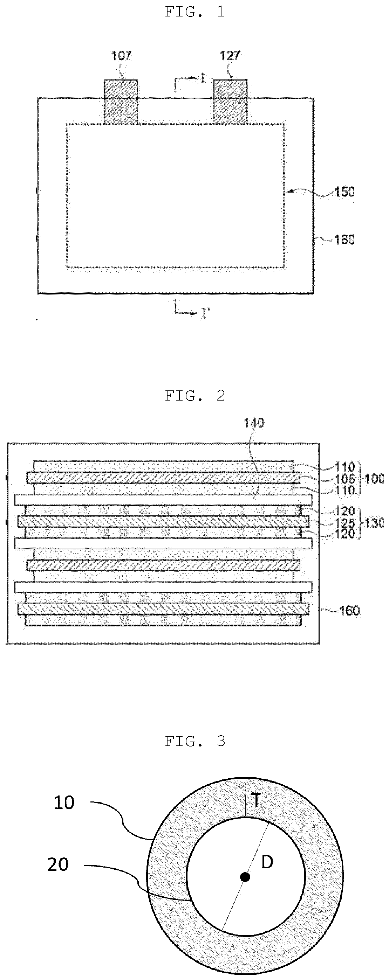

In an example embodiment, the coating shell 10 may have an average thickness (T) of 0.5 nm to 200 nm, 1.0 nm to 200 nm, 50 nm to 200 nm, 50 nm to 150 nm, or about 100 nm, but is not necessarily limited thereto. The thickness (T) of the coating shell 10 refers to a length obtained by subtracting a core radius from the total radius of the core-shell structure material, as indicated in FIG. 3.

In an example embodiment, the nitrile-based compound included in the electrolyte is not particularly limited as long as it is a compound including one or more nitrile groups (-CN). For example, the nitrile-based compound may include any one or more of succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undecanedinitrile, and/or dodecandinitrile.

In an example embodiment, the electrolyte may further include a lithium salt. The lithium salt is an ionizable lithium salt and is not particularly limited to a specific lithium salt. For example, the lithium salt may include any one or more of lithium bis (trifluoromethanesulfonyl) imide (LiTFSI, $(CF_3SO_2)_2NLi$), lithium bis (fluorosulfonyl) imide (LiFSI, $(SO_2F)_2NLi$), lithium bis (oxalato) borate (LiBOB, $LiB(C_2O_4)_2$), $(C_2F_5SO_2)_2NLi$, LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $(CF_3SO_2)_3CLi$, $LiBF_2(C_2O_4)$, $LiAlO_2$, and/or $LiN(C_xF_{2x+1}SO_2)(C_yF_{2y+1}SO_2)$ (x and y are natural numbers). In an example embodiment, the electrolyte may form a robust and thin SEI film on a negative electrode by including an imide-based lithium salt such as LiFSI.

In an example embodiment, the electrolyte may not include an additional solvent, and in this case, may be formed of only a nitrile-based compound, only a nitrile-based compound and a lithium salt, or only a nitrile-based compound, a lithium salt, and a predetermined additive.

In an example embodiment, the electrolyte may include a nitrile-based compound, which for mixing with other components is suitably melted at a temperature of 40°C to 80°C, 50°C to 80°C, 50°C to 70°C, or 60°C to 80°C, and a lithium salt, and may further include a predetermined additive. Otherwise, the electrolyte may be formed by further including the molten nitrile-based compound and any one or more of the lithium salt and an additive without an additional solvent or compound.

In an example embodiment, when the electrolyte further includes the lithium salt, a weight ratio between the nitrile-based compound and the lithium salt may be 1:10 to 10:1, 2:8 to 8:2, 4:6 to 6:4, or about 3:1. However, the weight range is only an example, and the disclosed technology is not necessarily limited to the range.

In an example embodiment, the electrolyte may further include a carbonate-based additive. The carbonate-based additive may improve coatability of the electrolyte, and may also promote the more effective formation of a solid electrolyte interphase (SEI) more effectively. The carbonate-based additive based on an example embodiment may be used at a smaller content than the content used as a solvent of a common liquid electrolyte. For example, it may be included at 0.1 wt% to 10 wt%, or, for example, 10 wt% or less, 8 wt% or less, or 5 wt% or less, based on the total weight of the electrolyte, and the lower limit may be 0.1 wt% or more, 0.5 wt% or more, or 1.0 wt% or more. Specifically, for example, the carbonate-based additive may be included at 1.0 wt% to 5.0 wt%.

The carbonate-based additive may include any one or more of fluoroethylene carbonate (FEC), vinylene carbonate (VC), vinyl ethylene carbonate (VEC), ethylene carbonate (EC), propylene carbonate (PC), and/or difluoroethylene carbonate (DiFEC).

In addition, the electrolyte may further include an additive other than an optional carbonated-based additive, and its content may be 5 wt% or less with respect to the total weight of the electrolyte, but the content is not limited as long as the effect of the disclosed technology is achieved. Since the additive is not particularly limited as long as it is a known additive which may be included in the electrolyte, further description will be omitted herein.

The electrolyte based on an example embodiment may be a liquid phase or a gel phase at room temperature.

Herein, the liquid phase or the gel phase may be visually evaluated or measured as follows. When the electrolyte is placed in a quartz cell of $10\times40\times50$ mm and allowed to stand at room temperature for 12 hours, and then a haze is measured using a calorimeter (e.g., COH400, Nippon Denshoku Co., Ltd.) with the electrolyte being spaced 100 mm vertically from a halogen lamp under the conditions of a rated voltage of 12 V and a power consumption of 50 W, the liquid phase means having the haze of 50% or less and the gel phase means having the haze of more than 50% and less than 90%.

The electrolyte based on an example embodiment may be present between the electrode and the separator as the liquid phase or the gel phase, and a part of the electrolyte may be present in the form of filling pores of the porous separator.

In an example embodiment, the electrolyte may be a liquid phase or gel phase electrolyte or may be obtained by heating two or more solid phase functional layers to a predetermined temperature or higher and mixing them with each other, resulting in phase transformation into a liquid phase or a gel phase at room temperature. Specifically, a first functional layer (solid phase) including a nitrile-based compound and a second functional layer (solid phase) including a nitrile-based compound are applied on both surfaces of the separator and/or disposed within the pores of the separator (e.g., filling the pores of the separator), respectively, and then mixed with each other by heating to a predetermined temperature or higher.

Herein, as described above, since the first functional layer and the second functional layer may further include a lithium salt in addition to the nitrile-based compound, the carbonate-based additive may be optionally further included.

In an example embodiment, the functional layer may be formed within a range of 50% or more, 60% or more, 70% or more, 80% or more, 85% or more, 90% or more, 95% or more, or about 100% with respect to the total surface area of the separator. In addition, it may have an area between the numerical values, and for example, may be formed with an area of 80% to 100% with respect to the total surface area of the separator. However, since the range is only an example, the disclosed technology is not necessarily limited to the range.

In an example embodiment, the functional layer is a solid phase at room temperature, for example, at 20°C to 35°C, but when being heated to 40°C or higher, 50°C or higher, or 60°C or higher, the solid phase functional layers are melted and mixed with each other to change the composition of components of each layer, so that it maintains the liquid phase or gel phase as it is without transforming into a solid phase even at room temperature which is a low temperature. Herein, the heating temperature is not limited as long as it is a temperature at which the coating layers coated on both surfaces are melted and mixed with each other without affecting the pores of the separator based on an example embodiment, and for example, may be 40°C to 80°C, or 60°C to 80°C.

Among various examples of the nitrile-based compound described above, succinonitrile (SN), (3,4-dimethoxyphenyl)acetonitrile, 2-(4-bromo-2-methoxyphenyl)acetonitrile, 2-fluorophenylacetonitrile, 2-chloro-4-fluorophenylacetonitrile, and 4-fluorophenylacetonitrile are compounds which have a melting point of 40°C or higher and are present as a solid at room temperature, and glutaronitrile, adiponitrile, pimelonitrile, suberonitrile, nonanedinitrile, sebaconitrile, undecanedinitrile, and dodecandinitrile are compounds which may be present as a solid at room temperature when mixed with a lithium salt.

The nitrile-based compound may be 50 wt% or more, 55 wt% or more, 60 wt% or more, 65 wt% or more, 70 wt% or more, 75 wt% or more, 80 wt% or more, 85 wt% or more, 90 wt% or more and 99.9 wt% or less, 95 wt% or less, 90 wt% or less, based on the total weight of the electrolyte, or any value between the numerical values described above. For example, it may be 50 wt% to 99.9 wt%, 55 wt% to 99.9 wt%, 60 wt% to 90 wt%, or 60 wt% to 80 wt%.

In an example embodiment, when the electrolyte further includes the lithium salt, the lithium salt is mixed with the nitrile-based compound and is present as a solid phase at 10°C to 35°C, but when the separator is heated and each functional layer is melted and mixed with each other, the content of the lithium salt is not limited as long as the lithium salt does not maintain a solid state at room temperature (e.g., 10°C to 35°C) anymore and is present as a liquid phase or gel phase.

As an embodiment, for example, the content of the lithium salt may be less than 50 wt%, 49 wt% or less, 45 wt% or less, 40 wt% or less, 35 wt% or less, 30 wt% or less, 25 wt% or less, 20 wt% or less, 15 wt% or less and 10 wt% or more, 20 wt%, based on the total weight of the electrolyte, or any value between the numerical values described above. For example, it may be 10 wt% to 49 wt%, 10 wt% to 30 wt%, or 20 wt% to 30 wt%.

In an example embodiment, a first functional layer is formed of the nitrile-based compound alone, and a second functional layer may be a mixture of the nitrile-based compound and the lithium salt at a weight ratio of 1:1 to 1.5:1 or about 10:1. In an example embodiment, the total weight of the first functional layer and the second functional layer may be adjusted so that the total weight of the nitrile-based compound included in the functional layer may be 2 to 7 times that of the lithium salt. Each functional layer maintains a solid phase by adjustment to the above range, which may facilitate transport.

In an example embodiment, the first functional layer may be formed by being impregnated in a part or all of the surface of the porous substrate and the pores inside, and for example, may be formed at 0.5 g/m$^2$ to 10 g/m$^2$. The second functional layer may be formed by being impregnated in a part or all of the surface of the porous substrate and the pores inside, and for example, may be formed at 0.5 g/m$^2$ to 10 g/m$^2$. Herein, the coating amounts of the first functional layer and the second functional layer may be the same as or different from each other.

In an example embodiment, succinonitrile and the lithium salt are mixed with each other and phase transformed from a solid phase into a liquid phase or a gel phase, and simultaneously, since succinonitrile has a transisomer (trans-gauche isomerism) to a center C-C bond at a melting point or lower, it has ion conduction behavior. Therefore, it may act as an electrolyte. Herein, the transisomer contributes to lattice defect worsening and activation energy lowering for ionic conductivity, thereby increasing ion mobility. Therefore, the electrolyte based on an example embodiment may provide a broader electrochemical window than a conventional liquid electrolyte including an organic solvent and an ionic liquid.

The electrolyte based on an example embodiment may be formed of only the nitrile-based compound, of only the nitrile-based compound and the lithium salt, or of only the nitrile-based compound, the lithium salt, or the carbonyl-based additive.

In an example embodiment, the polyolefin may include polyethylene (PE) and/or polypropylene (PP). Specifically, for example, the polymer membrane may be polypropylene or polyethylene, or laminated in the order of polyethylene/polypropylene, polyethylene/polypropylene/polyethylene, and polypropylene/polyethylene/polypropylene.

The separator based on an example embodiment may be surface-treated for improving coatability and/or impregnability of the electrolyte. For example, it may be hydrophilicly treated by means such as plasma and arc discharge in the presence of oxygen or air, but is not limited thereto.

In the case of the liquid phase or gel phase electrolyte, a porous support is suitably used. However, wet or dry separators made from commonly used polyolefin-based polymers face challenges in maintaining consistent wettability with the electrolyte due to various factors such as porosity, pore size, or polarity of the porous support. These chemical and/or physical factors may reduce electrolyte uptake, resulting in deterioration of battery performance. To address this issue, the disclosed technology can be implemented in some embodiments to provide the porous separator including a structure in which a polyolefin polymer strand is coated with the hydrophilic inorganic material and/or the hydrophilic polymer to exhibit sufficient wettability with the electrolyte including the nitrile-based compound. In this way, the porous separator can enhance battery life and performance while simultaneously providing the fire stability effect of the nitrile-based compound.

In an example embodiment, the separator may be formed of only a core-shell structure in which the polyolefin strand as a core is coated with one or more of the hydrophilic inorganic material or the hydrophilic polymer to form a shell layer.

In an example embodiment, the separator may have a thickness of 1 $\mu$m to 100 m, 1 $\mu$m to 80 $\mu$m, 1 $\mu$m to 50 $\mu$m, 1 $\mu$m to 30 $\mu$m, 1 $\mu$m to 20 $\mu$m, 5 $\mu$m to 20 $\mu$m, or 5 to 15 $\mu$m. In some implementations, since the thickness range is only an example, it is not necessarily limited to the range.

In an example embodiment, the polyolefin strand of the core may have a diameter of 1 nm to 300 nm, 10 nm to 250 nm, or 10 nm to 200 nm. In an example embodiment, the strand of the core-shell structure in which the coating shell 10 is formed on the polyolefin strand (core 20) may have a diameter (D+2T) of 1 nm to 300 nm, 10 nm to 250 nm, or 10 nm to 200 nm. The diameter may be measured by a scanning electron microscope (SEM). The diameter (D) of the core 20 refers to a diameter of the core indicated in FIG. 3.

A contact angle of the separator based on an example embodiment to the electrolyte may be 5° to 50°, 5° to 30°, 5° to 20°, or 10° to 15°. The contact angle is measured 10 seconds after 3 $\mu$L of an electrolyte is dropped onto a separator using drop shape analyzer equipment (e.g., Mobile Surface Analyzer, Kruss GmbH, Germany), and may be a value measured under a dry room environment of a temperature of 24°C and a relative humidity of 0.5 RH% or less.

The separator based on an example embodiment may have an ionic conductivity of $0.1 \times 10^{-4}$ S/cm or more, $1.0 \times 10^{-4}$ S/cm or more, $3.0 \times 10^{-4}$ S/cm or more, $5.0 \times 10^{-4}$ S/cm or more, $6.0 \times 10^{-4}$ S/cm or more, $6.9 \times 10^{-4}$ S/cm or more, $7.8 \times 10^{-4}$ S/cm or more, $7.9 \times 10^{-4}$ S/cm or more, or $8.3 \times 10^{-4}$ S/cm or more. Herein, the upper limit may be 0.01 S/cm or less, 0.005 S/cm or less, 0.003 S/cm or less, 0.001 S/cm or less, or $9.0 \times 10^{-4}$ S/cm or less.

The separator based on an example embodiment may have a porosity of 20% to 80%, 20% to 60%, 20% to 50%, 35% to 45%, 40% to 45%, or 40% to 43%. The porosity may be measured using the following equation:

$$\texttt{Porosity = [1-\{(W/T) \div \rho\}] \times 100}$$

W = weight of separator per unit area (g/m$^2$),
T = sample thickness (m),
$\rho$ = true density (g/m$^3$) of entire separator calculated from each material of resin and/or coating layer.

In an example embodiment, the electrochemical device may be a lithium secondary battery. Herein, the lithium secondary battery may be formed of a polygonal, cylindrical, or pouch shape.

In an example embodiment, the lithium secondary battery may be, for example, a lithium metal secondary battery, a lithium ion secondary battery, a lithium polymer secondary battery, or a lithium ion polymer secondary battery.

A positive electrode included in the lithium secondary battery based on an example embodiment includes a positive electrode active material capable of absorbing and desorbing lithium ions, and as the positive electrode active material, at least one of cobalt, manganese, or nickel and a composite metal oxide with lithium may be used. A solid solubility rate between metals may be various, and in addition to these metals, at least one of Mg, Al, Co, K, Na, Ca, Si, Ti, Sn, V, Ge, Ga, B, As, Zr, Mn, Cr, Fe, Sr, V or rare earth elements may be further included. As a specific example of the positive electrode active material, a compound represented by one of the following Chemical Formulae may be used:

$Li_aA_{1-b}B_bD_2$ ($0.90 \leq a \leq 1.8$ and $0 \leq b \leq 0.51$); $Li_aE_{1-b}B_eO_{2-c}D_c$ ($0.90 \leq a \leq 1.8$, $0 \leq b \leq 0.5$, and $0 \leq c \leq 0.05$); $LiE_{2-b}B_bO_{4-c}D_c$ ($0 \leq b \leq 0.5$ and $0 \leq c \leq 0.05$); $Li_aNi_{1-b-c}Co_bB_cD_\alpha$ ($0.90 \leq a \leq 1.8$, $0 \leq b \leq 0.5$, $0 \leq c \leq 0.05$, and $0 < \alpha \leq 2$); $Li_aNi_{1-b-c}Co_bB_cO_{2-ex}F_{ex}$ ($0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_2$ ($0.90 \leq a \leq 1.8$, $0 \leq b \leq 0.5$, $0 \leq c$

$\leq 0.05$, and $0 < \alpha < 2$); $Li_aNi_{1-b-c}Mn_bB_cD_\alpha$ ($0.90 \leq a \leq 1.8, 0 \leq b \leq 0.5, 0 \leq c \leq 0.05$, and $0 < \alpha \leq 2$); $Li_aNi_{1-b-c}Mn_eB_cO_{2-\alpha}F_\alpha$ ($0.90 \leq a \leq 1.8, 0 \leq b \leq 0.5, 0 \leq c \leq 0.05$, and $0 < \alpha < 2$); $Li_aNi_{1-e-c}Mn_bB_cO_{2-\alpha}F_2$ ($0.90 \leq a \leq 1.8, 0 \leq b \leq 0.5, 0 \leq c \leq 0.05$, and $0 < \alpha < 2$); $Li_aNi_eE_cG_dO_2$ ($0.90 \leq a \leq 1.8, 0 \leq b \leq 0.9, 0 \leq c \leq 0.5$, and $0.001 \leq d \leq 0.1$); $Li_aNi_eCo_cMn_dGeO_2$ ($0.90 \leq a \leq 1.8, 0 \leq b \leq 0.9, 0 \leq c \leq 0.5, 0 \leq d \leq 0.5$, and $0.001 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMnG_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above Chemical Formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The negative electrode includes a negative electrode active material capable of absorbing and desorbing lithium ions, and as the negative electrode active material, carbon materials such as crystalline carbon, amorphous carbon, a carbon composite, and carbon fibers, a lithium metal, an alloy of lithium with other elements, and similar materials or a combination thereof may be used. For example, the amorphous carbon may be hard carbon, coke, mesocarbon microbead (MCMB) fired at 1500°C or lower, mesophase pitch-based carbon fibers (MPCF), or similar materials, or other amorphous carbon in which lithium ion can be intercalated. The crystalline carbon includes graphite-based materials, specifically natural graphite, graphitized cokes, graphitized MCMB, graphitized MPCF, and other crystalline carbon. The carbonbased material may have an interplanar distance of 3.35 Å to 3.38 Å, and a crystalline size (Lc) by X-ray diffraction of at least 20 nm or more. As other elements forming the alloy with lithium, aluminum, zinc, bismuth, cadmium, antimony, silicon, lead, tin, gallium, or indium may be used.

The positive electrode or the negative electrode may be manufactured by dispersing an electrode active material, a binder, a conductive material, and if necessary, a thickener in a solvent to prepare an electrode slurry composition and applying the slurry composition on an electrode current collector. As a positive electrode current collector, aluminum, an aluminum alloy, or other possible metal sheet materials may be often used, and as a negative electrode current collector, copper, a copper alloy, or other possible metal sheet materials may be often used. The positive electrode current collector and the negative electrode current collector may be in the form of foil or mesh.

In an example embodiment, the binder is a material acting to perform pasting of the active material, mutual adhesion of the active material, adhesion to a current collector, a buffering effect to expansion and shrinkage of the active material, and other suitable functions of the binder in the electrode, and, for example, polyvinylidene fluoride (PVdF), a copolymer of polyhexafluoropropylene-polyvinylidene fluoride (PVdF/HFP), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene, polyvinyl chloride, polyacrylonitrile, polyvinyl pyridine, a styrene butadiene rubber, an acrylonitrilebutadiene rubber, and other binder materials may be used. The content of the binder may be 0.1 wt% to 30 wt% or 1 wt% to 10 wt% with respect to the electrode active material. When the content of the binder is too low, the adhesive strength between the electrode active material and the current collector is insufficient, and when the content of the binder is too high, the adhesive strength is better, but the content of the electrode active material is decreased by the increased amount of the binder, and thus, it may be unfavorable for increasing a battery capacity.

In an example embodiment, the conductive material is used for imparting conductivity to an electrode, and any material may be used as long as it is an electron conductive material without causing a chemical change, and may be at least one of a graphite-based conductive material, a carbon black-based conductive material, or a metal or metal compound-based conductive material. An example of the graphite-based conductive material includes artificial graphite, natural graphite, or a combination thereof, an example of the carbon black-based conductive material includes acetylene black, ketjen black, denka black, thermal black, channel black, or a combination thereof, and an example of the metalbased or metal compound-based conductive material includes a perovskite material such as tin, tin oxide, tin phosphate ($SnPO_4$), titanium oxide, potassium titanate, $LaSrCoO_3$, $LaSrMnO_3$ or a combination thereof. However, the disclosed technology is not limited to the conductive materials listed above. The content of the conductive material may be 0.1 wt% to 10 wt% with respect to the electrode active material.

The thickener is not particularly limited as long as it may serve to control the viscosity of an active material slurry, and for example, may be carboxymethyl cellulose, hydroxymethyl cellulose, hydroxyethyl cellulose, hydroxypropyl cellulose, or a combination thereof.

As a solvent in which the electrode active material, the binder, the conductive material, and other additives are dispersed, a non-aqueous solvent or an aqueous solvent may be used. The non-aqueous solvent may include, for example, N-methyl-2-pyrrolidone (NMP), dimethyl formamide, dimethyl acetamide, N,N-dimethylaminopropylamine, ethylene oxide, tetrahydrofuran, and a combination thereof.

In a further aspect, the combination of a separator and an electrolyte, wherein the separator includes a porous film including a core-shell structure that includes a coating shell formed on at least one polyolefin strand; and wherein the electrolyte includes the nitrile-based compound, may be used for the purpose of exhibiting the separator with wettability towards the electrolyte including the nitrile-based compound. The wettability may be improved compared to a separator that conventionally includes a hydrophobic polymer film such as a polyolefin film or porous separator made thereof. In addition to wettability, an effective performance of thermal stability, nonflammability and/or fire stability, which is associated with the nitrile-based compound, may be simultaneously provided.

In an example embodiment, the electrochemical device may be used in electric vehicles, uninterruptible power supplies, battery storage power stations, and others including battery power storage for solar panels, wind power generators and other green tech power generators.

FIGS. 1 and 2 are a schematic plan view and a cross-sectional view showing the lithium secondary batteries based on example embodiments, respectively. For example, FIG. 2 is a cross-sectional view taken along the line I-I' of FIG. 1.

Referring to FIGS. 1 and 2, the lithium secondary battery may include an electrode assembly 150 including a positive electrode 100, a negative electrode 130, and a separator 140 interposed between the positive electrode and the negative electrode. The electrode assembly 150 may be housed with an electrolyte and impregnated in a case 160.

The positive electrode 100 may include a positive electrode current collector 105 and a positive electrode active material layer 110 on the positive electrode current collector 105. The positive electrode active material layer 110 may include a positive electrode active material, and, if necessary, a positive electrode binder, a conductive material, and/or a dispersion medium. The positive electrode 100 may be manufactured by, for example, mixing and stirring a positive electrode active material, a positive electrode binder, a conductive material, a dispersion medium, and optionally other additives to prepare a positive electrode slurry, and applying (coating) the slurry on the positive electrode current collector 105, drying, and rolling (compressing) .

The negative electrode 130 may include a negative electrode current collector 125 and a negative electrode active material layer 120 on the positive electrode current collector 125. The negative electrode active material layer 120 may include a negative electrode active material, and, if necessary, a negative electrode binder, a conductive material, and/or a dispersion medium. The negative electrode 130 may be manufactured by for example, mixing and stirring a negative electrode active material, a negative electrode binder, a conductive material, a dispersion medium, and optionally other addtivies to prepare a negative electrode slurry, and applying (coating), drying, and rolling (compressing) the slurry on the negative electrode collector 125.

Electrode tabs (positive electrode tab and negative electrode tab) may protrude from the positive electrode current collector 105 and the negative electrode current collector 125 belonging to each electrode cell, respectively, and be extended to one side portion of the case 160. The electrode tabs may be fused with the one side portion of the case 160 to form electrode leads (positive electrode lead 107 and negative electrode lead 127) which are extended or exposed to the outside of the case 160.

Hereinafter, the examples and the experimental examples will be illustrated specifically in detail in the following. However, since the examples and the experimental examples described later only illustrate a part of one example embodiment, the technology described in some embodiments of the disclosed technology should not be construed as being limited thereto.

**\<Test method\>**

**1. Analysis of physical properties of separator**

The thickness of the separator was calculated as an average value obtained by measuring the thickness of a 10-layer separator using a contact type micrometer (Mitutoyo, Japan) and then dividing the value by 10.

The weight per area of the separator was obtained by measuring the weight of an area of 10 cm×10 cm using an electronic scale capable of measuring up to 4 decimal places and then converting the value into unit area.

The porosity of the separator was calculated using the following equation based on the thickness and the weight per area of the separator measured above:

$$\mathtt{Porosity\ =\ [1-\{(W/T)\div\rho\}]\times100}$$

(W = weight of separator per unit area (unit: $g/m^2$), T = sample thickness (unit: m), and $\rho$ = true density of entire separator calculated from each material of resin and/or coating layer (unit: $g/m^3$)).

**2. Analysis of contact angle**

The liquid electrolyte contact angles of the separators manufactured in the examples and the comparative examples were measured using drop shape analyzer equipment (Mobile Surface Analyzer, Kruss, Germany), immediately after manufacture of the separators. The contact angle was measured 10 seconds after dropping 3 μL of the liquid

electrolyte prepared by the example 1 below onto the separator, and the measurement was performed in a dry room environment of a temperature of 24°C and a relative humidity of 0.5 RH% or less.

### 3. Analysis of spreading rate

10 mg of drops of the liquid electrolyte prepared by the example 1 below were dropped onto a separator having an area of 10 cm×10 cm using a pipette, and then the longest part of the radius of the electrolyte spreading in a circular shape was measured after 10 seconds.

### 4. Analysis of ionic conductivity

The ionic conductivity of the separators of each example and comparative example was calculated from the following equation:

$$\texttt{Ionic conductivity = L÷(R×A)}$$

(L = thickness of separator impregnated with the liquid electrolyte prepared by the example 1 below (unit: cm), R = impedance value of separator impregnated with liquid electrolyte (unit: $\Omega$ = 1/S) (real part value when impedance imaginary part value is 0), and A = overlapping area between two stainless steel(SUS) electrodes when measuring impedance (unit: $cm^2$)).

For determining the R value, the separator was punched out to make a concentric circle having a diameter of 18 mm and then impregnated with a liquid electrolyte. At this time, the L value was measured in micrometers, and the A value was determined as 2.5447 $cm^2$. Thereafter, a 2032 standard coin cell (SUS material) was assembled with the separator impregnated with the liquid electrolyte, and constant voltage impedance measurement was performed under the conditions of initial voltage of 0 V and 5 mV amplitude in a range of 100 MHz to 100 mHz with IM6 equipment available from Zahner GmbH. The real part impedance value R when the imaginary part value was 0 was calculated by the measured impedance equivalent circuit fitting.

### 5. Analysis of capacity implementation rate

A single-plate cell manufactured so that a theoretical design capacity was 80 mAh was charged/discharged from 2.7 V (constant current) to 4.3 V (constant current constant voltage) with 0.1 C in the first cycle, 0.2 C in the second cycle, and then 0.5 C in the third cycle, and then the capacity was measured. The capacity implementation rate was calculated as a percentage of a ratio between the measured capacity and the theoretical design capacity.

### 6. Measurement of weight average molecular weight

Measurement of weight average molecular weight was performed by using GPC (EcoSEC HLC-8320 GPC Reflective Index detector from Tosoh Corporation) using TSKgel guard PWx, two columns of TSKgel GMPWxl and TSKgel G2500PWxl (7.8×300 mm) as a GPC column, a 0.1 M aqueous NaNO3 solution as a developing solvent, and polyethylene glycol as a standard, and performing analysis at 40°C at a flow rate of 1 mL/min.

### 7. Measurement of particle diameter

Particle diameter was measured in accordance with the ISO standard(ISO13320-1) using a particle size analyzer (Microtrac, Microtrac S3500).

### 8. Measurement of specific surface area

Specific surface area was measured in accordance with the standard(KS A 0094) using a surface area analyzer (Micromeritics, TriStarII).

### <Example 1>

### Manufacture of separator

A microporous membrane (ENPASS, SK Innovation CO., LTD., average pore size: 40 nm, strand size: 10 to 300 nm) fabric formed of a polyethylene (PE) strand was coated with $Al_2O_3$ (precursor: trimethylaluminum, $O_2$, carrier gas: Ar, Plasma power: 100W, Base pressure: 0.02Torr, Working pressure: 3Torr, Chamber temperature: 100°C) as hydrophilic ceramic using atomic layer deposition (ALD) to manufacture a porous separator having a core-shell structure in which a polyethylene strand was coated with a hydrophilic inorganic layer. The manufactured porous separator had a thickness of 10 $\mu$m, a weight per area of 7.1 g/m$^2$, and a porosity of 41.3%.

**Manufacture of electrolyte**

60 g of succinonitrile (SN) was heated to 60°C and melted, and then 20 g of LiFSi and 4 g of FEC were added to prepare an electrolyte.

The phases at room temperature for the different compositions are shown in Table 1 below.

[Table 1]

| Succinonitrile:LiFSI (Weight ratio) | Phase at room temperature | Haze measurement (%) |
|---|---|---|
| 1:1 | Solid | 99.2 |
| 1.5:1 | Solid | 98.5 |
| 2:1 | Gel | 85 |
| 2.5:1 | Gel | 82 |
| 3:1 | Liquid | 0 |
| 5:1 | Liquid | 0 |
| 6:1 | Liquid | 0 |
| 6.5:1 | Liquid | 0 |
| 7:1 | Gel | 75 |
| 10:1 | Solid | 98.12 |

**Manufacture of battery**

Manufacture of positive electrode: 92 wt% of a lithium cobalt composite oxide (LiCoO$_2$) as a positive electrode active material, 4 wt% of carbon black as a conductive material, and 4 wt% of polyvinylidene fluoride (PVdF) as a binder were added to N-methyl-2-pyrrolidone (NMP) as a solvent to prepare a positive electrode mixture slurry. The prepared slurry was applied on an aluminum (Al) thin film having a thickness of 30 $\mu$m and dried at a temperature of 120°C, and roll-pressing was performed to manufacture a positive electrode having a thickness of 140 $\mu$m.

Manufacture of negative electrode: 96 wt% of graphite carbon, 3 wt% of PVdF as a binder, and 1 wt% of carbon black as a conductive material were added to NMP as a solvent to prepare a negative electrode mixture slurry. The prepared slurry was applied on a copper (Cu) thin film having a thickness of 20 $\mu$m and dried at 120°C, and rolling pressing was performed to manufacture a negative electrode having a thickness of 150 $\mu$m.

The manufactured separator was applied between the positive electrode and the negative electrode to assemble a pouch type battery, and 2 g of the previously manufactured liquid electrolyte was injected into each assembled battery to manufacture a lithium secondary battery. Thus, a pouch type lithium ion secondary battery having a capacity of 80 mAh was manufactured.

**<Example 2>**

A battery was manufactured referring to Example 1, but the polyethylene strand was coated with a TiO$_2$ layer using titanium isopropoxide as a precursor instead of a trimethylaluminum precursor. The manufactured porous separator had a thickness of 10 $\mu$m, a weight per area of 6.5 g/m$^2$, and a porosity of 41.0%.

**<Example 3>**

A battery was manufactured referring to Example 1, but the separator was manufactured as follows. A polyethylene fabric was coated with an aqueous solution of 1 parts by weight of polyvinyl alcohol (PVA, Mw: 120,000) as a hydrophilic polymer, using dip coating to manufacture a porous separator including a core-shell structure in which a polyethylene strand was coated with a hydrophilic polymer. The manufactured porous separator had a thickness of 11 $\mu$m,

a weight per area of 5.6 g/m$^2$, and a porosity of 42.1%.

**<Example 4>**

A battery was manufactured referring to Example 3, but poly(ethylene Oxide) (PEO, Mw 60,000) was used as a hydrophilic polymer instead of polyvinyl alcohol in the manufacture of the separator. The manufactured porous separator had a thickness of 11 μm, a weight per area of 5.5 g/m$^2$, and a porosity of 42.8%.

**<Comparative Example 1>**

A battery was manufactured referring to Example 1, but a polyethylene (PE) microporous membrane (SK Innovation CO., LTD., average pore size: 40 nm) having a thickness of 9.0 μm was used as the separator. The weight and the porosity of the polyethylene membrane were 5.1 g/m$^2$ and 40.35%.

**<Comparative Example 2>**

A battery was manufactured referring to Example 1, but a polypropylene (PP) microporous membrane (SK Innovation CO., LTD., average pore size: 40 nm) having a thickness of 9.0 μm was used as the separator. At this time, the weight and the porosity of the polypropylene separator were 5.2 g/m$^2$ and 42.92%.

**<Comparative Example 3>**

3 parts by weight of polyacrylamide (Mw 150,000 g/mol, Sigma Aldrich Inc.) with respect to 100 parts by weight of boehmite particles (γ-AlO(OH)) having an average particle diameter of 300 nm was added to water, and 0.7 parts by weight of a dispersing agent (BYK-2018) to boehmite was added and stirred to prepare a uniform aqueous slurry having a solid content of 30 wt%. Both surfaces of a polyethylene microporous membrane having a thickness of 9 μm (ENPASS, SK Innovation CO., LTD., average pore size: 40 nm) as a substrate was coated with the prepared slurry composition as an aqueous slurry using bar coating at a speed of 10 m/min, and then drying and winding were performed with hot air at 45°C until there was no more reduction in weight. The thicknesses of the coating layers on both surfaces after drying were 2.0 μm, respectively. The manufactured porous separator had a thickness of 13 μm, a weight per area of 9.3 g/m$^2$, and a porosity of 46.83%. Subsequently, a battery was manufactured in the same manner as in Example 1, using the manufactured separator.
The components and the physical properties of the separators manufactured in the examples and the comparative examples are summarized and shown in the following Table 2.

[Table 2]

| | Core-shell structure separator | | | | Hydrophobic polymer separator | | Coating separator |
|---|---|---|---|---|---|---|---|
| | Example 1 | Example 2 | Example 3 | Example 4 | Comparative Example 1 | Comparative Example 2 | Comparative Example 3 |
| Component | PE/Al$_2$O$^3$ | PF/TiO$_2$ | PF/PVA | PE/PEO | PE | PP | PE/Al(OOH) |
| Thickness (μm) | 10 | 10 | 11 | 11 | 9.0 | 9.1 | 13.0 |
| Weightperarea (g/m$^2$) | 7.1 | 6.5 | 5.6 | 5.5 | 5.1 | 52 | 9.3 |
| Porosity (%) | 41.3 | 41.0 | 42.1 | 42.8 | 40.35 | 42.92 | 46.83 |

**<Experimental Example>**

The physical properties of the separators and the batteries manufactured in the examples and the comparative examples were analyzed based on the test method. The results are shown in the following Table 3.

[Table 3]

| | Example 1 | Example 2 | Example 3 | Example 4 | Comparat ive Example 1 | Comparat ive Example 2 | Comparat ive Example 3 |
|---|---|---|---|---|---|---|---|
| Contact angle (°) | 12 | 13 | 12 | 12 | 90 | 90 | 15 |
| Spreading rate (cm/10 s) | 1.2 | 1.0 | 1.1 | 1.1 | 0.1 | 0.2 | 0.5 |
| Ionic conductivit y (S/cm) | $8.3\times10^{-4}$ | $6.9\times10^{-4}$ | $7.8\times10^{-4}$ | $7.9\times10^{-4}$ | $0.0012\times1 0^{-4}$ | $0.0007\times1 0^{-4}$ | $0.0016\times1 0^{-4}$ |
| Capacity implementat ion rate (%) | 99 | 99 | 99 | 98 | 31 | 27 | 36 |

As confirmed from Table 3, since the separators of the examples including the core-shell structure formed by coating the polyolefin fabric strand with the hydrophilic inorganic material or hydrophilic polymer all had the contact angle of about 15° or less and the spreading rate of 1.0 cm/10 s or more, it was found that they were able to secure higher ionic conductivity than the comparative examples due to the excellent wettability to an electrolyte including the nitrile-based compound. In addition, since the batteries manufactured in the examples all had a capacity implementation rate of about 98% or more, high capacity of the battery was allowed, unlike the comparative examples.

The disclosed technology relates to an electrochemical device including a porous separator. The electrochemical device based on an implementation may exhibit high ionic conductivity by including an electrolyte including a nitrile-based compound and a porous separator having wettability to the electrolyte.

The disclosed technology for electrochemical devices can be implemented in various applications, including secondary batteries or rechargeable batteries that are widely used in electric vehicles, uninterruptible power supplies, battery storage power stations, and others including battery power storage for solar panels, wind power generators and other green tech power generators. Specifically, the disclosed technology can be implemented in some applications to provide secondary batteries that can improve the battery reliability and performance and, accordingly, to mitigate climate change. Secondary batteries based on the disclosed technology can be used to address various adverse effects such as air pollution and greenhouse emissions by powering electric vehicles (EVs) as alternatives to vehicles using fossil fuel based engines and by providing battery based energy storage systems (ESS) to store renewable energy such as solar power and wind power.

While the disclosed technology has been illustrated and described with respect to specific embodiment, it should be understood that various enhancements and modifications of the disclosed embodiments and other embodiments may be made based on what is described and illustrated in this patent document.

**Claims**

1. An electrochemical device comprising:

a positive electrode;
a negative electrode;
a separator disposed between the positive electrode and the negative electrode; and
an electrolyte disposed in the electrochemical device to allow ions to pass between the positive electrode and the negative electrode,
wherein the separator includes a porous membrane including a core-shell structure that includes a coating shell formed on at least one polyolefin strand, wherein the coating shell includes one or more of a hydrophilic inorganic material or a hydrophilic polymer, and
wherein the electrolyte includes a nitrile-based compound.

2. The electrochemical device of claim 1, wherein the nitrile-based compound includes one or more of succinonitrile, (3,4-dimethoxyphenyl)acetonitrile, 2-(4-bromo-2-methoxyphenyl)acetonitrile, 2-fluorophenylacetonitrile, 2-chloro-4-fluorophenylacetonitrile, 4-fluorophenylacetonitrile, glutaronitrile, adiponitrile, pimelonitrile, suberonitrile, nonanedinitrile, sebaconitrile, undecanedinitrile, or dodecandinitrile.

3. The electrochemical device of claim 1 or 2, wherein the electrolyte further includes a lithium salt, preferably wherein the lithium salt includes one or more of lithium bis(trifluoromethanesulfonyl)imide (LiTFSI), lithium bis(fluorosulfonyl) imide (LiFSI), lithium bis(oxalato)borate (LiBOB), $(C_2F_5SO_2)_2NLi$, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, (CF$_3$SO$_2$)$_3$CLi, LiBF$_2$(C$_2$O$_4$), LiAlO$_2$, or LiN(C$_x$F$_{2x+1}$SO$_2$)(C$_y$F$_{2y+1}$SO$_2$) wherein x and y are natural numbers.

4. The electrochemical device of any one of claims 1 to 3, wherein the polyolefin includes one or more of polyethylene or polypropylene.

5. The electrochemical device of any one of claims 1 to 4, wherein the hydrophilic inorganic material includes one or more of Al$_2$O$_3$, boehmite (AlOOH), SiO$_2$, SnO$_2$, ZrO$_2$, TiO$_2$, SiC, Si$_3$N$_4$, CaO, MgO, ZnO, BaTiO$_3$, LiAlO$_2$, BaSO$_4$, CaCO$_3$, Y$_2$O$_3$, or CeO$_2$, and/or wherein the hydrophilic inorganic material has an average particle size of 1 nm to 200 nm.

6. The electrochemical device of any one of claims 1 to 5, wherein the hydrophilic polymer includes one or more of polyethylene oxide (PEO), polyimide (PI), polysulfone (PS), polyethersulfone (PES), cellulose acetate (CA), polyacrylonitrile (PAN), polyethylene glycol (PEG), polypropylene glycol (PPG), polymethylmethacrylic acid (PMMA), polyacrylic acid (PAA), or polyvinyl alcohol (PVA).

7. The electrochemical device of any one of claims 1 to 6, wherein the coating shell has an average thickness of 0.5 nm to 200 nm.

8. The electrochemical device of any one of claims 1 to 7, wherein the electrolyte adopts a liquid phase or a gel phase at room temperature,
optionally wherein adopting the liquid phase or the gel phase at room temperature is determined as follows:
when the electrolyte is placed in a quartz cell of 10×40×50 mm and allowed to stand at room temperature for 12 hours, and then a haze is measured using a colorimeter with the electrolyte being spaced 100 mm vertically from a halogen lamp under conditions of a rated voltage of 12 V and a power consumption of 50 W,
the liquid phase electrolyte has the haze of 50% or less and the gel phase electrolyte has the haze of more than 50% and less than 90%.

9. The electrochemical device of any one of claims 1 to 8, wherein at least a part of the electrolyte is disposed within pores of the separator.

10. The electrochemical device of any one of claims 3 to 9, wherein a weight ratio between the nitrile-based compound and the lithium salt is 1:10 to 10:1, preferably wherein the electrolyte further includes a carbonate-based additive of 0.1 wt% to 10 wt% with respect to the total weight of the electrolyte.

11. The electrochemical device of any one of claims 1 to 10, wherein the electrolyte is formed of only the nitrile-based compound, or of only the nitrile-based compound and the lithium salt, or of only the nitrile-based compound, the lithium salt and the carbonate-based additive.

12. The electrochemical device of any one of claims 1 to 11, wherein the separator has at least one of the following properties, respectively alone or in combination:

    i) a thickness is 1 $\mu$m to 100 $\mu$m,
    ii) a contact angle is 5° to 50°,
    iii) an ionic conductivity is $0.1 \times 10^{-4}$ S/cm or more, and/or
    iv) a porosity is 20% to 80%.

13. The electrochemical device of any one of claims 1 to 12, wherein the electrochemical device is a lithium secondary battery.

14. Use of a combination of a separator and an electrolyte, wherein the separator includes a porous film including a core-shell structure that includes a coating shell formed on at least one polyolefin strand, wherein the coating shell includes one or more of a hydrophilic inorganic material or a hydrophilic polymer and wherein the electrolyte includes a nitrile-based compound,

for providing wettability of the separator with the electrolyte including the nitrile-based compound, optionally for further providing thermal stability, nonflammability and fire stability.

15. Use of the electrochemical device according to any one of claims 1 to 14, or use of the combination of a separator and an electrolyte according to claim 14,
respectively in methods for manufacturing electric vehicles, uninterruptible power supplies, battery storage power stations, solar panels, and/or wind power generators.

## FIG. 1

107        127

150

160

## FIG. 2

140

110
105 } 100
110

120
125 } 130
120

160

## FIG. 3

10

20

T

D

# EP 4 614 641 A1

Europäisches
Patentamt

European
Patent Office

Office européen
des brevets

## EUROPEAN SEARCH REPORT

**Application Number**

EP 25 15 9637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 419 100 A1 (LG CHEMICAL LTD [KR]) 26 December 2018 (2018-12-26) * claims 1, 4 and 13; paragraphs 12, 25 and 77-82; examples * | 1-15 | INV. H01M10/0525 H01M50/417 H01M50/434 H01M50/443 |
| A | XU RUIJIE ET AL: "Boehmite-coated microporous membrane for enhanced electrochemical performance and dimensional stability of lithium-ion batteries", JOURNAL OF SOLID STATE ELECTROCHEMISTRY, SPRINGER, BERLIN, DE, [Online] vol. 22, no. 3, 23 October 2017 (2017-10-23), - 23 October 2017 (2017-10-23), pages 739-747, XP036417568, ISSN: 1432-8488, DOI: 10.1007/S10008-017-3780-3 [retrieved on 2025-07-17] * page 740, right hand column, "coated membrane properties"; pages 740-746, "Results and discussion" * | 1-15 | H01M50/446 H01M50/451 H01M50/457 H01M50/489 H01M50/491 |

-/--

**TECHNICAL FIELDS
SEARCHED (IPC)**

H01M

The present search report has been drawn up for all claims

| Place of search | Date of completion of the search | Examiner |
|---|---|---|
| Munich | 17 July 2025 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 15 9637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIN WON-KYUNG ET AL: "High performance ceramic-coated separators prepared with lithium ion-containing SiO2 particles for lithium-ion batteries", JOURNAL OF POWER SOURCES, [Online] vol. 226, 1 March 2013 (2013-03-01), pages 54-60, XP093296823, AMSTERDAM, NL ISSN: 0378-7753, DOI: 10.1016/j.jpowsour.2012.10.082 Retrieved from the Internet: URL:https://pdf.sciencedirectassets.com/271367/1-s2.0-S0378775312X00260/1-s2.0-S0378775312016485/main.pdf?hash=a9b3479450b60f4518af6e7da67cb5a9e27ccfa5498a1e5024bfe9b8a773bfc6&host=68042c943591013ac2b2430a89b270f6af2c76d8dfd086a07176afe7c76c2c61&pii=S0378775312016485&tid=spdf-291a0683-1a24-47da-9727-19f> [retrieved on 2025-07-17] * pages 55-59, paragraphs 2 and 3; in particular paragraph 2.2 * ----- | 1-15 | |
| A | EP 0 981 172 A1 (CELGARD LLC [US]) 23 February 2000 (2000-02-23) * claims; examples; paragraphs 12-14 * ----- | 1-15 | **TECHNICAL FIELDS SEARCHED (IPC)** |

The present search report has been drawn up for all claims

| Place of search | Date of completion of the search | Examiner |
|---|---|---|
| Munich | 17 July 2025 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 2 of 2

## ANNEX TO THE EUROPEAN SEARCH REPORT
## ON EUROPEAN PATENT APPLICATION NO.

EP 25 15 9637

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | | Publication date | Patent family member(s) | | Publication date |
|---|---|---|---|---|---|
| EP 3419100 | A1 | 26-12-2018 | CN | 108886169 A | 23-11-2018 |
| | | | EP | 3419100 A1 | 26-12-2018 |
| | | | KR | 20180066724 A | 19-06-2018 |
| | | | PL | 3419100 T3 | 14-06-2021 |
| | | | US | 2019074545 A1 | 07-03-2019 |
| | | | WO | 2018105970 A1 | 14-06-2018 |
| EP 0981172 | A1 | 23-02-2000 | CA | 2277677 A1 | 14-02-2000 |
| | | | DE | 69920353 T2 | 29-09-2005 |
| | | | EP | 0981172 A1 | 23-02-2000 |
| | | | JP | 4618831 B2 | 26-01-2011 |
| | | | JP | 2000103886 A | 11-04-2000 |
| | | | KR | 20000017247 A | 25-03-2000 |
| | | | TW | 460532 B | 21-10-2001 |
| | | | US | 6287730 B1 | 11-09-2001 |

EPO FORM P0459

For more details about this annex : see Official Journal of the European Patent Office, No. 12/82